(19) 

Europäisches Patentamt
European Patent Office
Office européen des brevets

(11) **EP 4 442 461 A1**

(12) **EUROPEAN PATENT APPLICATION**
published in accordance with Art. 153(4) EPC

(43) Date of publication:
**09.10.2024 Bulletin 2024/41**

(21) Application number: **22900838.8**

(22) Date of filing: **24.06.2022**

(51) International Patent Classification (IPC):
**B32B 27/32** $^{(2006.01)}$      **B65D 65/40** $^{(2006.01)}$

(52) Cooperative Patent Classification (CPC):
**B32B 27/32; B65D 65/40**

(86) International application number:
**PCT/JP2022/025331**

(87) International publication number:
**WO 2023/100403 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.11.2021   JP 2021194581**

(71) Applicant: **Sumitomo Chemical Company, Limited
Tokyo 103-6020 (JP)**

(72) Inventors:
- **IGAWA, Nao
  Ichihara-shi, Chiba 299-0195 (JP)**
- **ITO, Eiko
  Ichihara-shi, Chiba 299-0195 (JP)**

(74) Representative: **Vossius & Partner
Patentanwälte Rechtsanwälte mbB
Siebertstrasse 3
81675 München (DE)**

(54) **LAMINATED FILM, AND METHOD FOR PRODUCING SAME**

(57)    Provided is a laminated film that enables easy material recycling and has excellent impact strength. Formed on top of each other are: a layer A containing an ethylene polymer (A) having 80 mol% or more of an ethylene-derived structural unit; a layer B containing an ethylene polymer (B) having 70 mol% or more of an ethylene-derived structural unit and an inorganic filler (A); a layer C containing an ethylene polymer (C) having 70 mol% or more of an ethylene-derived structural unit; a barrier layer and/or an adhesive layer; a layer D containing an ethylene polymer (D) having 70 mol% or more of an ethylene-derived structural unit and an inorganic filler (B), the ethylene polymer (D) constituting at least 75% by mass but less than 99.5% by mass of the layer D; and a layer E containing an ethylene polymer (E) having 70 mol% or more of an ethylene-derived structural unit.

EP 4 442 461 A1

**Description**

Technical Field

The present invention relates to a laminated film and a method for producing the same.

Background Art

For example, a plastic (resin) film is frequently used as a laminated film that includes a plurality of layers having various functions. Examples of such a resin film include a single-use resin packaging material. As an example, the resin packaging material is formed by forming, on top of each other, the following layers: a base material layer formed from a resin film, such as a stretched nylon film and a polyethylene terephthalate (PET) film, and a metal film such as aluminum; and a sealant layer including a polyethylene film and the like. Here, the base material film and the sealant film can be formed on top of each other with an adhesive agent or the like interposed therebetween.

For example, Patent Literature 1 describes a laminated film in which formed are: layers A, B, and C each containing an ethylene polymer that contains a structural unit derived from ethylene in a predetermined amount; a barrier layer and/or an adhesive layer; and a layer D containing an ethylene polymer that contains a structural unit derived from ethylene in a predetermined amount, wherein the layer B contains an inorganic filler, and the ethylene polymer contained in the layer D has a density of not less than 880 kg/m$^3$ and less than 930 kg/m$^3$ and a melt flow rate of 0.01 g/10 min to 3 g/10 min.

Citation List

[Patent Literature]

[Patent Literature 1]
Specification of Japanese Patent No. 6716764

Summary of Invention

Technical Problem

For material recycling, a laminated film that includes a base layer formed from a resin such as nylon and polyethylene terephthalate (PET) and a sealant layer formed from a polyethylene resin and the like has a problem that it is difficult to separate and recover resins constituting the respective layers.

With regard to this, the laminated film described in Patent Literature 1, even without including a resin film made from polyethylene terephthalate or the like formed therein, satisfies the level required for a packaging material in terms of rigidity and thermal shrinkage resistance. However, the laminated film described in Patent Literature 1 has room for improvement in terms of impact strength.

An object of an aspect of the present invention is to provide: a laminated film that enables easy material recycling and that has excellent impact strength; and a related technique thereof.

Solution to Problem

As a result of intensive studies on the above problems, the inventors of the present invention have found that a laminated film which is a mono-material film containing a polyethylene resin as a main component and which has high impact strength is obtained by further providing a layer D containing an ethylene polymer (D) and an inorganic filler (B) in a laminated film in which a layer containing an ethylene polymer and a layer containing an ethylene polymer and an inorganic filler are formed on top of each other, and have completed the present invention.

In order to solve the above problems, a laminated film in accordance with an aspect of the present invention includes:

a layer A containing an ethylene polymer (A) containing a structural unit derived from ethylene in an amount of not less than 80 mol%;

a layer B containing an ethylene polymer (B) and an inorganic filler (A), the ethylene polymer (B) containing a structural unit derived from ethylene in an amount of not less than 70 mol%;

a layer C containing an ethylene polymer (C) containing a structural unit derived from ethylene in an amount of not less than 70 mol%;

one or more layers selected from the group consisting of a barrier layer and an adhesive layer;

a layer D containing an ethylene polymer (D) and an inorganic filler (B), the ethylene polymer (D) containing a structural unit derived from ethylene in an amount of not less than 70 mol%, the layer D having a content of the ethylene polymer (D) of not less than 75% by mass and less than 99.5% by mass and a content of the inorganic filler (B) of not less than 0.5% by mass and less than 25% by mass with respect to a total content of the ethylene polymer (D) and the inorganic filler (B) of 100% by mass; and

a layer E containing an ethylene polymer (E) containing a structural unit derived from ethylene in an amount of not less than 70 mol%,

wherein the layers are formed on top of each other in any of the following orders:

an order of the layer A, the layer B, the layer C, the barrier layer, the layer D, and the layer E;

an order of the layer A, the layer B, the layer C, the adhesive layer, the layer D, and the layer E;

an order of the layer A, the layer B, the layer C, the barrier layer, the adhesive layer, the layer D, and the layer E; and

an order of the layer A, the layer B, the layer C, the adhesive layer, the barrier layer, the layer D, and the layer E.

Advantageous Effects of Invention

An aspect of the present invention makes it possible to provide: a laminated film that enables easy material recycling and that has excellent impact strength; and a related technique thereof.

Description of Embodiments

The following description will discuss an embodiment of the present invention. The present invention is, however, not limited to the embodiment below. The present invention is not limited to the configurations described below, but may be altered in various ways by a skilled person within the scope of the claims. Any embodiments and examples obtained by appropriately combining technical means disclosed in different embodiments and examples are also encompassed in the technical scope of the present invention. Note that any numerical range expressed as "A to B" herein means "not less than A and not more than B" unless otherwise stated.

The following description will discuss aspects included in the present invention in detail.

<Laminated film>

A laminated film in accordance with an aspect of the present invention includes a layer A containing an ethylene polymer (A), a layer B containing an ethylene polymer (B) and an inorganic filler (A), a layer C containing an ethylene polymer (C), and one or more layers selected from the group consisting of a barrier layer and an adhesive layer, a layer D containing an ethylene polymer (D) and an inorganic filler (B), and a layer E containing an ethylene polymer (E), all the layers being formed on top of each other in this order, wherein at least one layer selected from the group consisting of the barrier layer and the adhesive layer is formed between the layer C and the layer D.

In the laminated film in accordance with an aspect of the present invention, a layer including the layer A, the layer B, and the layer C that are formed on top of each other in this order can be a base material layer. Here, a film that forms the base material layer may also be referred to as a base material film. Further, the layer D and the layer E can be each a sealant layer. Here, a film that forms the sealant layer may also be referred to as a sealant film. That is, the laminated film in accordance with an aspect of the present invention can be a laminated film in which the layer C in the base material layer including the layer A, the layer B, and the layer C that are formed on top of each other in this order and the layer D in the sealant layer including the layer D and the layer E are formed on top of each other with one layer selected from the group consisting of the barrier layer and the adhesive layer interposed between the layer C and the layer D. Here, the laminated film in accordance with an aspect of the present invention may include, between the layer E and the layer D, a layer F containing an ethylene polymer (F). Further, the laminated film in accordance with an aspect of the present invention may include a printed layer between the layer C and one layer selected from the group consisting of the barrier layer and the adhesive layer and may include a printed layer between one layer selected from the group consisting of the barrier layer and the adhesive agent layer and the layer D.

(1) Base material film (base material layer)

The base material film is a film in which the layer A containing the ethylene polymer (A), the layer B containing the ethylene polymer (B) and an inorganic filler, and the layer C containing the ethylene polymer (C) are formed on top of each other in this order, the layer A can be an outer layer, the layer B can be an intermediate layer, and the layer C can be an inner layer. The ethylene polymer (A), the ethylene polymer (B), and the ethylene polymer (C) can be each selected according to the mole fraction of monomer units derived from ethylene, density, and melt flow rate (MFR) of ethylene polymers. The base material film contains an inorganic filler at least in the layer B. In addition, the layer A, the layer B, and the layer C that constitute the base material film may each contain an additive as necessary.

(1-1) Ethylene polymer

(1-1-1) Mole fraction of monomer unit derived from ethylene

The mole fraction of a monomer unit derived from ethylene can be determined by, for example, an FT-IR method or an NMR method.

The ethylene polymer (A) contained in the layer A contains a structural unit derived from ethylene in an amount of not less than 80 mol%, preferably not less than 97 mol%, more preferably not less than 98 mol%, and even more preferably not less than 99 mol%. The ethylene polymer (A) may be composed of a structural unit derived from ethylene in an amount of 100 mol%. The ethylene polymer (A) containing a structural unit derived from ethylene in an amount of not less than 80 mol% brings about an effect of enabling high heat resistance and high chemical resistance to be imparted to the film. Note that, as the ethylene polymer (A) contained in the layer A, two or more types of ethylene polymers described later may be used in combination. In this case, at least one of two or more types of ethylene polymers only needs to contain, as the ethylene polymer (A), a structural unit derived from ethylene in an amount of not less than 80 mol%. In addition, when the ethylene polymer (A) and an ethylene polymer other than the ethylene polymer (A) are used in combination, the content of the ethylene polymer (A) is preferably not less than 60% by mass, and more preferably not less than 80% by mass, assuming that a total of the ethylene polymer (A) and the ethylene polymer other than the ethylene polymer (A) contained in the layer A is 100% by mass. The content of the ethylene polymer (A) of not less than 90% by mass makes it possible to suitably form the layer A.

The ethylene polymer (B) contained in the layer B contains a structural unit derived from ethylene in an amount of not less than 70 mol%, preferably not less than 97 mol%, more preferably not less than 98 mol%, and even more preferably not less than 99 mol%. The ethylene polymer (B) may be composed of a structural unit derived from ethylene in an amount of 100 mol%. The ethylene polymer (B) containing a structural unit derived from ethylene in an amount of not less than 70 mol% brings about an effect of enabling enhancement in film formation stability and enabling rigidity to be imparted to the film. Note that, as the ethylene polymer (B) contained in the layer B, two or more types of ethylene polymers described later may be used in combination. In this case, at least one of two or more types of ethylene polymers only needs to contain, as the ethylene polymer (B), a structural unit derived from ethylene in an amount of not less than 70 mol%. In addition, when the ethylene polymer (B) and an ethylene polymer other than the ethylene polymer (B) are used in combination, the content of the ethylene polymer (B) is preferably not less than 60% by mass, and more preferably not less than 80% by mass, assuming that a total of the two or more types of ethylene polymers contained in the layer B is 100% by mass. The content of the ethylene polymer (B) of not less than 90% by mass makes it possible to suitably form the layer B.

The ethylene polymer (C) contained in the layer C contains a structural unit derived from ethylene in an amount of not less than 70 mol%, preferably not less than 97 mol%, more preferably not less than 98 mol%, and even more preferably not less than 99 mol%. The ethylene polymer (C) may be composed of a structural unit derived from ethylene in an amount of 100 mol%. The ethylene polymer (B) containing a structural unit derived from ethylene in an amount of not less than 70 mol% brings about an effect of enabling high blocking resistance to be imparted to the base material film. Note that, as the ethylene polymer (C) contained in the layer C, two or more types of ethylene polymers described later may be used in combination. In this case, at least one of two or more types of ethylene polymers only needs to contain, as the ethylene polymer (C), a structural unit derived from ethylene in an amount of not less than 70 mol%. In addition, when the ethylene polymer (C) and an ethylene polymer other than the ethylene polymer (C) are used in combination, the content of the ethylene polymer (C) is preferably not less than 60% by mass, and more preferably not less than 80% by mass, assuming that a total of the two or more types of ethylene polymers contained in the layer C is 100% by mass. The content of the ethylene polymer (C) of not less than 90% by mass makes it possible to suitably form the layer C.

The ethylene polymer (A) contained in the layer A contains a structural unit derived from ethylene in an amount of not less than 80 mol%, the ethylene polymer (B) contained in the layer B contains a structural unit derived from ethylene in an amount of not less than 70 mol%, and the ethylene polymer (C) contained in the layer C contains a structural unit derived from ethylene in an amount of not less than 70 mol%. Thus, the base material film, while imparting functions as an outer layer, an intermediate layer, and an inner layer to the layer A, the layer B, and the layer C, respectively, enables the ethylene polymer (A), the ethylene polymer (B), and the ethylene polymer (C) to be suitably compatibilized when the base material film is melt-kneaded after use.

(1-1-2) Density of ethylene polymer

The densities of the ethylene polymer (A), the ethylene polymer (B), and the ethylene polymer (C) are measured according to Method A described in JIS K7112-1980 after an annealing treatment defined in JIS K6760-1995 has been carried out.

The ethylene polymer (A) contained in the layer A has a density of preferably not less than 930 kg/m$^3$, more preferably not less than 935 kg/m$^3$, and even more preferably not less than 940 kg/m$^3$, from the viewpoint of enhancing the rigidity of the film. Further, the density of the ethylene polymer (A) is preferably less than 970 kg/m$^3$, and more preferably not more than 960 kg/m$^3$, from the viewpoint of enhancing the transparency of the film.

The ethylene polymer (B) contained in the layer B has a density of preferably not less than 930 kg/m$^3$, more preferably not less than 935 kg/m$^3$, and even more preferably not less than 940 kg/m$^3$, from the viewpoint of enhancing the rigidity of the film. Further, the density of the ethylene polymer (B) is preferably less than 970 kg/m$^3$, and more preferably not more than 960 kg/m$^3$, from the viewpoint of enhancing the filler acceptability to the layer B and enhancing the processing stability of the film.

The ethylene polymer (C) contained in the layer C has a density of preferably not less than 900 kg/m$^3$, more preferably not less than 910 kg/m$^3$, and even more preferably not less than 915 kg/m$^3$, from the viewpoint of the rigidity, handleability, and impact strength of the film and from the viewpoint of being suitably reused together with the ethylene polymer (A) and the ethylene polymer (B). Further, the density of the ethylene polymer (C) is preferably less than 970 kg/m$^3$, and more preferably not more than 960 kg/m$^3$, from the viewpoint of enhancing the transparency of the film.

(1-1-3) Melt flow rate of ethylene polymer

The melt flow rates (MFR) of the ethylene polymer (A), the ethylene polymer (B), and the ethylene polymer (C) are measured at a temperature of 190°C and under a load of 21.18 N in accordance with JIS K7210-1-2014.

The ethylene polymer (A) has a melt flow rate (MFR) of preferably not less than 0.01 g/10 min, and more preferably not less than 0.1 g/10 min, from the viewpoint of the fish eyes, fluidity, appearance of the film surface, stickiness, and the like. Further, the melt flow rate (MFR) of the ethylene polymer (A) is preferably less than 3 g/ 10 min, and more preferably not more than 2 g/10 min, from the viewpoint of enhancing the strength of the film.

The ethylene polymer (B) has an MFR of preferably not less than 3 g/10 min, and more preferably not less than 4 g/10 min, from the viewpoint of the fish eyes, fluidity, appearance of the film surface, stickiness, and the like. Further, the MFR of the ethylene polymer (B) is preferably less than 25 g/10 min, and more preferably not more than 15 g/10 min, from the viewpoint of allowing the ethylene polymer (B) to contain an inorganic filler in an amount of 20% by mass to not less than 80% by mass and enhancing the strength of the film.

The ethylene polymer (C) has an MFR of preferably not less than 0.01 g/10 min, more preferably not less than 0.1 g/10 min, and even more preferably not less than 0.5 g/10 min, and also preferably less than 3 g/10 min, more preferably not more than 2.5 g/10 min, and even more preferably not more than 2 g/10 min, from the viewpoint of suitably adjusting an extrusion load in film shaping and enhancing the film strength.

(1-1-4) Type of ethylene polymer

Examples of ethylene polymers that can be used as the ethylene polymer (A), the ethylene polymer (B), and the ethylene polymer (C) include high-pressure low-density polyethylene, high-density polyethylene, an ethylene-α-olefin copolymer, an ethylene-vinyl ester copolymer, and an ethylene-unsaturated carboxylic ester copolymer.

Among the ethylene polymers, as the ethylene polymer (A), an ethylene-α-olefin copolymer, high-pressure low-density polyethylene, and high-density polyethylene are suitably used, and an ethylene-α-olefin copolymer and high-density polyethylene are more suitably used.

As the ethylene polymer (B), an ethylene-α-olefin copolymer and high-density polyethylene are suitably used.

As the ethylene polymer (C), high-pressure low-density polyethylene, high-density polyethylene, and an ethylene-α-olefin copolymer are suitably used, and an ethylene-α-olefin copolymer is more suitably used.

When the ethylene polymer is an ethylene-α-olefin copolymer, examples of an α-olefin having 3 to 20 carbon atoms used as a constituent unit of the ethylene-α-olefin copolymer include propylene, 1-butene, 1-pentene, 1-hexene, 1-heptene, 1-octene, 1-nonene, 1-decene, 1-dodecene, 4-methyl-1-pentene, and 4-methyl-1-hexene, and these may be used alone or in combination of two or more thereof. The α-olefin is preferably 1-butene and 1-hexene.

Examples of the ethylene-α-olefin copolymer include an ethylene-propylene copolymer, an ethylene-1-butene copolymer, an ethylene-1-hexene copolymer, an ethylene-1-octene copolymer, an ethylene-1-butene-1-hexene copolymer, and an ethylene-1-butene-1-octene copolymer, and these may be used alone or in combination of two or more thereof. Further, the ethylene-α-olefin copolymer is preferably an ethylene-1-butene copolymer, an ethylene-1-hexene copolymer, and an ethylene-1-butene-1-hexene copolymer.

Examples of a method for producing the ethylene-α-olefin copolymer include a production method that uses a known radical polymerization catalyst or a known ionic polymerization catalyst and that is based on a known polymerization method. Examples of the known catalyst include a peroxide catalyst, a Ziegler-Natta type catalyst, and a metallocene type catalyst, and examples of the known polymerization method include a solution polymerization method, a slurry polymerization method, a high-pressure ionic polymerization method, a high-pressure radical polymerization method, and a gas phase polymerization method.

Examples of the Ziegler-Natta type catalyst include a catalyst including a solid catalyst component for olefin polymerization containing a titanium atom, a magnesium atom, and a halogen atom, and an organometallic compound, and more specific examples thereof include a catalyst described in Japanese Patent Application Publication, Tokukaihei, No. 11-322833.

Examples of the metallocene type catalyst include the following catalysts (1) to (4).

(1) A catalyst including a component containing a transition metal compound having a group having a cyclopentadiene type backbone and a component containing an alumoxane compound.

(2) A catalyst including a component containing the transition metal compound and a component containing an ionic compound such as tritylborate or anilinium borate.

(3) A catalyst including a component containing the transition metal compound, a component containing the ionic compound, and a component containing an organometallic compound.

(4) A catalyst obtained by supporting or impregnating each of the above-described components on or into an inorganic particulate carrier of SiOa, $Al_2O_3$, or the like, or a particulate polymer carrier of a polymer of olefin such as ethylene or styrene.

Examples of the organometallic compound include butyllithium and triethylaluminum.

The ethylene-α-olefin copolymer is preferably an ethylene-α-olefin copolymer produced by a gas phase polymerization method using a metallocene type catalyst. Specific examples of the ethylene-α-olefin copolymer can include an ethyne-α-olefin copolymer described in Japanese Patent Application Publication, Tokukaihei, No. 9-183816.

Further, when the ethylene polymer is high-density polyethylene, examples of a production method for high-density polyethylene include a production method in which ethylene and an α-olefin having 3 to 12 carbon atoms are polymerized with use of a known catalyst by a known polymerization method. Examples of the known catalyst include a Ziegler-Natta type catalyst, and examples of the known polymerization method include a gas phase-solid phase polymerization method, a liquid phase-solid phase polymerization method, and a homogeneous liquid-phase polymerization method in the presence or absence of a solvent. The polymerization temperature is ordinarily 30°C to 300°C, and the polymerization pressure is ordinarily in a range from normal pressure to 3000 kg/cm².

Other ethylene polymers such as a high-pressure low-density polyethylene, an ethylene-vinyl ester copolymer, and an ethylene-unsaturated carboxylic ester copolymer may also be produced by a known production method, and a commercially available product may be used.

(1-2) Inorganic filler (A)

The base material film contains an inorganic filler (A) at least in the layer B. The content of the inorganic filler in the layer B is preferably 20% by mass to 80% by mass and more preferably 30% by mass to 70% by mass with respect to a total content of the ethylene polymer (B) and the inorganic filler (A) of 100% by mass. The content of the inorganic filler (A) in the layer B being not less than 20% by mass makes it possible to impart high rigidity and high thermal shrinkage resistance to the base material film and further to the laminated film obtained by forming the sealant film on the base material film, without forming a film such as a polyethylene terephthalate (PET) film and a polyamide film on the base material film. This eliminates the need to separate the polyethylene terephthalate (PET) film, the polyamide film, and the like when the base material film and the laminated film are recycled. Therefore, it is possible to recycle the base material film and the laminated film suitably as a shaping material composition of an ethylene polymer and the inorganic filler. Note that the content of the inorganic filler (A) in the layer B being not more than 80% by mass makes it possible to successfully co-extrude the layer B with the layer A and the layer C and makes it possible to successfully shape the base material film.

Note that the layer A and the layer C may each also contain an inorganic filler. The content of the inorganic filler in the layer A is not limited and only needs to be less than 20% by mass with respect to the total content of the ethylene polymer (A) and the inorganic filler of 100% by mass. Similarly, the content of the inorganic filler in the layer C is not limited and only needs to be less than 20% by mass with respect to the total content of the ethylene polymer (C) and the inorganic filler of 100% by mass.

Examples of the inorganic filler that can be contained in the layer A, the layer B, and the layer C constituting the base material film include calcium carbonate, kaolin, metakaolin, hydrotalcite, mica, talc, and fibrous basic magnesium sulfate particles. The use of these inorganic fillers makes it possible to avoid impairment of the transparency of the film. From the viewpoint of further increasing the rigidity of the film, hydrotalcite, talc, and fibrous basic magnesium sulfate particles are more preferable. These inorganic fillers may be used alone or in combination of two or more thereof. In addition, the inorganic filler may be surface-treated with, for example, a coupling agent or the like. In addition, the layer A, the layer B, and the layer C may each contain, as the inorganic filler, a coloring pigment such as titanium oxide and iron oxide.

The median diameter (d50) of the inorganic filler is not limited and is preferably 0.5 $\mu$m to 10 $\mu$m. Note that the median diameter (d50) of the inorganic filler can be measured as a volume-based median diameter by a laser diffraction method.

When the inorganic filler is fibrous basic magnesium sulfate particles, the fibrous basic magnesium sulfate particles preferably have, but not limited to, a fiber length of 8 $\mu$m to 30 $\mu$m and a fiber diameter of 0.5 $\mu$m to 1.0 $\mu$m.

(1-3) Additives

The layer A, the layer B, and the layer C may each contain at least one additive as necessary, provided that the object and effect of the present invention are not impaired.

Examples of the additive include a lubricant, a stabilizer (antioxidant), a surfactant, an antistatic agent, a processability improving agent, an anti-blocking agent, and a dye.

Examples of the lubricant include paraffin-based waxes such as liquid paraffin, natural paraffin, micro wax, polyethylene wax, chlorinated paraffin, fluorocarbon, and synthetic paraffin; fatty acid-based waxes such as stearic acid, palmitic acid, myristic acid, behenic acid, and arachidine; aliphatic amide-based waxes such as aliphatic amide and alkylene bis-fatty acid amide; fatty acid lower alcohol esters such as butyl stearate; esters such as polyhydric alcohol, polyglycol ester, and higher alcohol esters; metal soaps such as zinc stearate, magnesium stearate, calcium stearate, and ronozinc; polyhydric alcohols such as fatty alcohol, ethylene glycol, diethylene glycol, and triethylene glycol; partial esters of fatty acid and polyhydric alcohol; and partial esters of fatty acid and polyglycol/polyglycerol, and two or more of the lubricants may be used in combination.

The lubricant is preferably blended in a layer containing the inorganic filler. For example, when blended in the layer B, the lubricant is preferably contained in an amount of 0.2 parts by mass to 5.0 parts by mass with respect to 100 parts by mass of the total of the ethylene polymer (B) and the inorganic filler.

Examples of the stabilizer include phenol-based stabilizers typified by 2,6-di-t-butyl-p-cresol (BHT), tetrakis[methylene-3-(3,5-di-t-butyl-4-hydroxyphenyl)propionate]methane (IRGANOX (registered trademark) 1010, manufactured by BASF SE), n-octadecyl-3-(4'-hydroxy-3,5'-di-t-butylphenyl)propionate (IRGANOX (registered trademark) 1076, manufactured by BASF SE), and the like; and phosphite-based stabilizers typified by bis(2,4-di-t-butylphenyl)pentaerythritol diphosphite, tris(2,4-di-t-butylphenyl)phosphite, and the like.

Examples of the surfactant include anionic surfactants such as a carboxylate salt, a fatty acid salt, a cyclic fatty acid salt, a special polycarboxylate salt type activator, a sulfonate salt, an alkyl or alkenyl sulfonate salt, an alkyl allyl sulfonate salt, a polycondensate of alkyl allyl sulfonate salt, a sulfate salt, an alkyl sulfate ester, a polyoxyethylene-alkyl ether sulfate salt, a polyoxyethylene-alkyl phenyl ether sulfate salt, a phosphate ester, an alkyl phosphate ester, a polyoxyethylene-alkyl(phenyl)ether phosphate ester salt, and an inorganic phosphate salt; nonionic surfactants such as a polyoxyethylene derivative, a polyoxyethylene-alkyl ether, a polyoxyethylene-alkylphenyl ether, a polyoxyethylene-sorbitan fatty acid ester, a polyoxyethylene fatty acid ester, a polyoxyethylene-polyoxypropylene block polymer, a polyoxyethylene alkylamine, a polyoxyethylene alkyl amide, and a polyhydric alcohol-based derivative; cationic surfactants such as an alkylamine salt and a quaternary ammonium salt; amphoteric surfactants such as an alkyl betaine; fluorine-based surfactants; silicon-based surfactants; and reactive surfactants, and one or two or more of these compounds can be used.

In addition, the layer A, the layer B, and the layer C may each contain, as the additive, a polyolefin-based resin such as a low-density elastomer that is used for improving impact strength.

(2) Barrier layer and adhesive layer

The one or more layers selected from the group consisting of a barrier layer and an adhesive layer are layers located between the layer C and the layer D, and may be a single layer of either the barrier layer or the adhesive layer, or may be a multilayer including the barrier layer and the adhesive layer.

The barrier layer is a layer that prevents permeation of gases such as oxygen and water vapor. Examples of the barrier layer include a metal oxide layer formed by depositing an inorganic compound, and a layer formed from a composition containing an inorganic layered compound and a polyvinyl alcohol-based resin. Here, examples of the layer formed by vapor deposition of an inorganic compound include a layer formed from silicon oxide, alumina, and spinel.

The barrier layer can be, for example, the layer formed from a composition containing an inorganic layered compound and a polyvinyl alcohol-based resin.

Here, examples of the inorganic layered compound include a kaolinite group, a smectite group, and a mica group. Among them, a smectite group such as layered silicate mineral, hectorite, and saponite is preferable and easily incorporates a resin between the layers of the inorganic layered compound to form a composite. Among the smectite group, a layered silicate mineral is preferable, which can impart a high oxygen gas barrier property.

The polyvinyl alcohol-based resin is a polymer having a structural unit derived from vinyl alcohol as a main component. Examples of such a "polyvinyl alcohol" include a polymer obtained by hydrolyzing an acetate moiety of a vinyl acetate polymer; and respective polymers obtained by hydrolyzing a vinyl trifluoroacetate polymer, a vinyl formate polymer, a vinyl pivalate polymer, a t-butyl vinyl ether polymer, a trimethylsilyl vinyl ether polymer, and the like (for details of "polyvinyl alcohol", reference can be made to, for example, "PVA no Sekai (World of PVA)", edited by Poval-Kai (Poval Society), 1992, Kobunshi Kanko-Kai, Co., Ltd. (Polymer Publishing Society, Co., Ltd.); "Poval", Nagano et al., 1981, Kobunshi Kanko-Kai Co., Ltd.). The degree of "saponification" of the ester moiety of a polymer is preferably not less than 70 mol%, more preferably not less than 85 mol%, and even more preferably not less than 98 mol%. Further, the polymerization degree of a polymer used is preferably not less than 100 and not more than 5000, and more preferably not less than 200 and not more than 3000.

Further, the vinyl alcohol may be a so-called vinyl alcohol derivative having a functional group other than a hydroxyl group, and examples of the functional group other than a hydroxyl group include an amino group, a thiol group, a carboxyl group, a sulfonate group, a phosphate group, a carboxylate group, a sulfonate ion group, a phosphate ion group, an ammonium group, a phosphonium group, a silyl group, a siloxane group, an alkyl group, an allyl group, a fluoroalkyl group, an alkoxy group, a carbonyl group, and a halogen group.

Alternatively, the polyvinyl alcohol-based resin may be a copolymer containing a structural unit derived from vinyl alcohol and a structural unit derived from an $\alpha$-olefin such as ethylene or propylene. When the polyvinyl alcohol-based resin is a copolymer, the content of the structural unit derived from $\alpha$-olefin contained in the copolymer is preferably not more than 40 mol%, and more preferably not more than 15 mol%, from the viewpoint of solubility in an aqueous solvent.

The adhesive layer may be formed from an aqueous type adhesive agent or a solvent type adhesive agent for dry lamination, or may be formed from a solventless type adhesive agent for lamination. Examples of the adhesive agent for forming the adhesive layer include polyurethane-based adhesive agents such as a polyether-based polyurethane adhesive agent and a polyester-based polyurethane adhesive agent, polyester-based adhesive agents, imine-based adhesive agents, and titanate-based adhesive agents. Examples of the polyurethane-based adhesive agent include TAKELAC (registered trademark) (manufactured by Mitsui Chemicals, Inc.) and TAKENATE (registered trademark) (manufactured by Mitsui Chemicals, Inc.).

In addition, the adhesive layer may be a layer formed from high-density polyethylene, low-density polyethylene, ultra-low-density polyethylene, an ultra-low-density polyethylene ethylene-vinyl acetate copolymer, an ethylene-acrylic acid copolymer, an ethylene-acrylate ester copolymer, an ethylene-methacrylic acid copolymer, an ethylene-methacrylate ester copolymer, an ethylene-vinyl alcohol copolymer, an ethylene-vinyl acetate copolymer saponified product, an ethylene-styrene copolymer, an ethylene-vinyl cyclohexane copolymer, an ethylene-norbornene copolymer, a polyolefin rubber, a styrene-butadiene rubber, a styrene-butadiene-styrene block copolymer, an isoprene rubber, a styrene-isoprene rubber, an isobutylene rubber, or an acid-modified product, a hydrogenated product, or the like of these resins.

(3) Sealant film (sealant layer)

The sealant film is a film in which the layer D containing the ethylene polymer (D) and the inorganic filler (B) and the layer E containing the ethylene polymer (E) are formed on top of each other in this order, the layer D can be an inner layer, and the layer E can be an outer layer. The sealant film having the layer D containing the ethylene polymer (D) and the inorganic filler (B) and the layer E containing the ethylene polymer (E) makes it possible to achieve both the impact strength in the laminated film and the heat seal peel strength.

In addition, the sealant film may have, as an intermediate layer, a layer F containing an ethylene polymer (F) provided between the layer D and the layer E. This makes it possible to enhance the falling body strength of a bag or the like container formed from the laminated film. The falling body strength is evaluated as a strength for, when the bag or the like formed from the laminated film has been let fall, preventing leakage of the contents in the bag.

A laminated film in accordance with an aspect of the present invention is such that the sealant film in which the layer D and the layer E are formed is formed on the base material film which is material-recyclable, and thus makes it possible to enhance the impact strength without forming, on the base material film, a film such as a polyethylene terephthalate (PET) film and a polyamide film. That is, it is possible to enhance the impact strength of the laminated film while maintaining the property of being material-recyclable.

Further, the layer D preferably contains an ethylene polymer (G), in addition to the ethylene polymer (D) and the inorganic filler (B).

(3-1) Ethylene polymer

(3-1-1) Mole fraction of monomer unit derived from ethylene

The ethylene polymer (D) contained in the layer D can contain a structural unit derived from ethylene in an amount of not less than 70 mol% and preferably not less than 90 mol%. The ethylene polymer (D) may be composed of a structural unit derived from ethylene in an amount of 100 mol%. Note that the layer D may contain, in addition to the ethylene polymer (D), the ethylene polymer (G), which will be described later, and/or an ethylene polymer other than the ethylene polymer (G).

When the layer D contains the ethylene polymer (D) and an ethylene polymer other than the ethylene polymer (G), the content of the ethylene polymer (D) is preferably not less than 60% by mass, and more preferably not less than 80% by mass, assuming that a total of the ethylene polymer (D) and the ethylene polymer other than the ethylene polymer (G) contained in the layer D is 100% by mass, and the content of the ethylene polymer (D) is even more preferably not less than 90% by mass from the viewpoint of suitably forming the layer D.

When the layer D contains the ethylene polymer (D), the ethylene polymer (G), and an ethylene polymer other than the ethylene polymer (G), the content of the ethylene polymer (D) and the ethylene polymer (G) is preferably not less than 60% by mass, and more preferably not less than 80% by mass, assuming that a total of the content of the ethylene polymer (D), the content of the ethylene polymer (G), and the content of the ethylene polymer other than the ethylene polymer (G) contained in the layer D is 100% by mass, and the content of the ethylene polymer (D) is even more preferably not less than 90% by mass from the viewpoint of suitably forming the layer D.

The ethylene polymer (E) contained in the layer E can contain a structural unit derived from ethylene in an amount of not less than 70 mol% and preferably not less than 90 mol%. The ethylene polymer (E) may be composed of a structural unit derived from ethylene in an amount of 100 mol%. Further, when the ethylene polymer (E) and an ethylene polymer other than the ethylene polymer (E) are used in combination, the content of the ethylene polymer (E) is preferably not less than 60% by mass, and more preferably not less than 80% by mass, assuming that a total of the two or more types of ethylene polymers contained in the layer E is 100% by mass, and the content of the ethylene polymer (E) is even more preferably not less than 90% by mass from the viewpoint of suitably forming the layer E.

When the sealant film includes the layer F, the ethylene polymer (F) contained in the layer F can contain a structural unit derived from ethylene in an amount of not less than 70 mol% and preferably not less than 90 mol%. The ethylene polymer (F) may be composed of a structural unit derived from ethylene in an amount of 100 mol%. Further, when the ethylene polymer (F) and an ethylene polymer other than the ethylene polymer (F) are used in combination, the content of the ethylene polymer (F) is preferably not less than 60% by mass, and more preferably not less than 80% by mass, assuming that a total of the two or more types of ethylene polymers contained in the layer F is 100% by mass, and the content of the ethylene polymer (F) is even more preferably not less than 90% by mass from the viewpoint of suitably forming the layer F.

The layer D may contain the ethylene polymer (G), in addition to the ethylene polymer (D). The ethylene polymer (G) can contain a structural unit derived from ethylene in an amount of not less than 70 mol% and preferably not less than 90 mol%. The ethylene polymer (G) may be composed of a structural unit derived from ethylene in an amount of 100 mol%. Further, when the layer D contains the ethylene polymer (G), the layer D has a content of the ethylene polymer (G) of preferably not less than 0.1 parts by mass and not more than 20 parts by mass with respect to a total of the content of the ethylene polymer (D) and the content of the inorganic filler (B) of 100 parts by mass. The layer (D) having the content of the ethylene polymer (G) of not less than 0.1 parts by mass and not more than 20 parts by mass with respect to a total of the content of the ethylene polymer (D) and the content of the inorganic filler (B) of 100 parts by mass makes it possible to enhance the impact strength of the laminated film.

The ethylene polymer (D) contained in the layer D, the ethylene polymer (E) contained in the layer E, and the ethylene polymer (F) contained in the layer F each contain a structural unit derived from ethylene in an amount of not less than 70 mol%. Thus, the sealant film, while imparting functions as an inner layer, an intermediate layer, and an outer layer to the layer D, the layer F, and the layer E, respectively, is formed on the base material film, so that a laminated film can be formed. Further, melt-kneading of the laminated film after use enables the ethylene polymer (A), the ethylene polymer (B), and the ethylene polymer (C) in the base material film and the ethylene polymer (D), the ethylene polymer (E), and the ethylene polymer (F) in the sealant film to be suitably compatibilized.

(3-1-2) Density of ethylene polymer

As in the case of the ethylene polymers (A) to (C), the densities of the ethylene polymer (D), the ethylene polymer (E), the ethylene polymer (F), and the ethylene polymer (G) are measured according to Method A described in JIS K7112-1980 after an annealing treatment defined in JIS K6760-1995 has been carried out.

The ethylene polymer (D) has a density of preferably not less than 900 kg/m$^3$, more preferably not less than

910 kg/m$^3$, and even more preferably not less than 915 kg/m$^3$, from the viewpoint of being suitably reused together with the base material film. Further, the density of the ethylene polymer (D) is preferably less than 930 kg/m$^3$, and more preferably not more than 925 kg/m$^3$, from the viewpoint of enhancing the impact strength as the sealant film.

The ethylene polymer (E) has a density of preferably not less than 880 kg/m$^3$, more preferably not less than 890 kg/m$^3$, even more preferably not less than 895 kg/m$^3$, and preferably less than 930 kg/m$^3$, from the viewpoint of maintaining the handleability as the sealant film and the transparency of the film and enhancing the heat seal peel strength.

The ethylene polymer (F) has a density of preferably not less than 910 kg/m$^3$, more preferably not less than 913 kg/m$^3$, even more preferably not less than 915 kg/m$^3$, and preferably less than 930 kg/m$^3$. The ethylene polymer (F) having a density of not less than 910 kg/m$^3$ and less than 930 kg/m$^3$ makes it possible to enhance the falling body strength of a bag formed from the laminated film.

The ethylene polymer (G) has a density of preferably not less than 940 kg/m$^3$, more preferably not less than 945 kg/m$^3$, and even more preferably not less than 950 kg/m$^3$, from the viewpoint of enhancing the impact strength as the sealant film. Further, the density of the ethylene polymer (G) is preferably less than 970 kg/m$^3$, and more preferably not more than 965 kg/m$^3$, from the viewpoint of, as the sealant film, enhancing the filler acceptability to the layer D and enhancing the processing stability of the film.

(3-1-3) Melt flow rate of ethylene polymer

The melt flow rates (MFR) of the ethylene polymer (D), the ethylene polymer (E), and the ethylene polymer (F), as in the case of the ethylene polymer (A) and the like, are measured at a temperature of 190°C and under a load of 21.18 N in accordance with JIS K7210-1-2014.

The ethylene polymer (D) has an MFR of preferably not less than 0.01 g/10 min, more preferably not less than 0.1 g/10 min, and even more preferably not less than 0.5 g/10 min, and also preferably less than 3 g/10 min, and more preferably not more than 2 g/10 min, from the viewpoint of suitably adjusting an extrusion load in film shaping and enhancing the film strength.

The ethylene polymer (E) has an MFR of preferably not less than 0.01 g/10 min, more preferably not less than 0.1 g/10 min, and even more preferably not less than 0.5 g/10 min, and also preferably less than 3 g/10 min, and more preferably not more than 2 g/10 min, from the viewpoint of suitably adjusting an extrusion load in film shaping and enhancing the film strength.

The ethylene polymer (F) has an MFR of preferably not less than 0.01 g/10 min, more preferably not less than 0.1 g/10 min, and even more preferably not less than 0.5 g/10 min, and also preferably less than 3 g/10 min, and more preferably not more than 2 g/10 min, from the viewpoint of suitably adjusting an extrusion load in film shaping and enhancing the film strength.

The ethylene polymer (G) has an MFR of preferably not less than 0.01 g/10 min, more preferably not less than 0.1 g/10 min, and even more preferably not less than 0.5 g/10 min, and also preferably less than 10 g/10 min, more preferably not more than 7 g/10 min, even more preferably not more than 5 g/10 min, and most preferably 3 g/10 min, from the viewpoint of suitably adjusting an extrusion load in film shaping and enhancing the film strength.

(3-1-4) Type of ethylene polymer

Examples of ethylene polymers that can be used as the ethylene polymer (D), the ethylene polymer (E), the ethylene polymer (F), and the ethylene polymer (G) include high-pressure low-density polyethylene, high-density polyethylene, an ethylene-α-olefin copolymer, an ethylene-vinyl ester copolymer, and an ethylene-unsaturated carboxylic ester copolymer.

Among the ethylene polymers, as the ethylene polymer (D) and the ethylene polymer (E), an ethylene-α-olefin copolymer, high-pressure low-density polyethylene, and high-density polyethylene are suitably used, and an ethylene-α-olefin copolymer and high-pressure low-density polyethylene are more suitably used.

As the ethylene polymer (F), high-pressure low-density polyethylene, high-density polyethylene, and an ethylene-α-olefin copolymer are suitably used, and an ethylene-α-olefin copolymer is more suitably used.

As the ethylene polymer (G), high-pressure low-density polyethylene, high-density polyethylene, and an ethylene-α-olefin copolymer are suitably used, and an ethylene-α-olefin copolymer and high-density polyethylene are more suitably used.

Examples of the ethylene-α-olefin copolymer that is used as the ethylene polymer (D), the ethylene polymer (E), the ethylene polymer (F), and the ethylene polymer (G) include an ethylene-propylene copolymer, an ethylene-1-butene copolymer, an ethylene-1-hexene copolymer, an ethylene-1-octene copolymer, an ethylene-1-butene-1-hexene copolymer, and an ethylene-1-butene-1-octene copolymer, and these may be used alone or in combination of two or more thereof. Further, the ethylene-α-olefin copolymer is preferably an ethylene-1-butene copolymer, an ethylene-1-hexene copolymer, and an ethylene-1-butene-1-hexene copolymer.

A method for producing an ethylene polymer including an ethylene-$\alpha$-olefin copolymer is as described in the "[1-1-4] Type of ethylene polymer" section above.

(3-2) Inorganic filler (B)

The sealant layer contains an inorganic filler (B) at least in the layer D. Regarding the content of the inorganic filler in the layer D, with respect to a total content of the ethylene polymer (D) and the inorganic filler (B) of 100% by mass, the content of the ethylene polymer (D) is not less than 75% by mass and less than 99.5% by mass, and the content of the inorganic filler (B) is not less than 0.5% by mass and less than 25% by mass. The content of the inorganic filler (B) contained in the layer D is not less than 0.5% by mass, preferably not less than 1% by mass, more preferably not less than 1.5% by mass, and even more preferably not less than 2% by mass, and is preferably less than 25% by mass. The layer D having the content of the inorganic filler of not less than 0.5% by mass and less than 25% by mass makes it possible to enhance the impact strength of the laminated film while maintaining adhesion between the layer D and the base material film.

Note that the layer F may also contain an inorganic filler. The content of the inorganic filler in the layer F is not limited and only needs to be less than 20% by mass with respect to the total content of the ethylene polymer (F) and the inorganic filler of 100% by mass. Similarly, the content of the inorganic filler in the layer E is not limited and only needs to be less than 20% by mass with respect to the total content of the ethylene polymer (E) and the inorganic filler of 100% by mass.

The type, median diameter, fiber length, and the like of the inorganic filler (B) that can be contained in D which is a component of the sealant film are the same as those of the inorganic filler (A).

(3-3) Additives

The layer D, the layer E, and the layer F may each contain at least one additive as necessary, provided that the object and effect of the present invention are not impaired. As in the case of the layer A, the layer B, and the layer C, examples of the additive include a lubricant, a stabilizer (antioxidant), a surfactant, an antistatic agent, a processability improving agent, an anti-blocking agent, and a dye.

In addition, the layer D, the layer E, and the layer F may each contain, as the additive, a polyolefin resin such as a low-density elastomer that is used for improving impact strength.

<Method for producing laminated film>

The laminated film in accordance with the present embodiment can be produced by a production method including the steps of: for the base material film in which the layer A, the layer B, and the layer C are formed on top of each other in this order, subjecting a surface of the base material film (layer A/layer B/layer C) on the layer C side thereof to a corona treatment; and forming the sealant film onto the corona-treated surface of the base material film on the layer C side thereof with one or more layers selected from the group consisting of the barrier layer and the adhesive layer interposed between the sealant film and the corona-treated surface of the base material film on the layer C side thereof.

The sealant film includes the layer D and the layer E that are formed on top of each other in this order, and the layer F may be formed between the layer D and the layer E. For the sealant film, a layer D side of the sealant film is subjected to a corona treatment, and the base material film is formed on the corona-treated surface of the sealant film on the layer D side thereof with one or more layers selected from the group consisting of the barrier layer and the adhesive layer interposed between the base material film and the corona-treated surface of the sealant film on the layer D side thereof.

A method for producing resin compositions for film shaping each containing an ethylene polymer for shaping the layer A, the layer B, or the layer C in the base material film and resin compositions for film shaping each containing an ethylene polymer for shaping the layer D, the layer E, or the layer F in the sealant film is not particularly limited, and the resin compositions may be prepared by separately melt-blending (melt-kneading) in advance, individually dry-blending, or dry-blending as one or more masterbatches. For the dry blending, any of various blenders such as a Henschel mixer and a tumbler mixer is used, and for the melt-blending, any of various mixers such as a single screw extruder, a twin screw extruder, a Banbury mixer, and a heat roll is used.

The layer A of the base material film has a thickness of preferably not less than 5 $\mu$m, and more preferably not less than 7 $\mu$m, from the viewpoint of enhancing the processing stability of the film. Further, the layer A of the base material film has a thickness of preferably not more than 30 $\mu$m, and more preferably not more than 20 um, from the viewpoint of enhancing the rigidity of the film.

The layer B of the base material film has a thickness of preferably not less than 10 $\mu$m, and more preferably not less than 12 $\mu$m, from the viewpoint of enhancing the rigidity of the film. Further, the layer B of the base material film has a thickness of preferably not more than 60 μm, and more preferably not more than 40 μm, from the viewpoint of enhancing the processing stability of the film.

The layer C of the base material film has a thickness of preferably not less than 5 μm, and more preferably not less than 7 μm, from the viewpoint of enhancing the processing stability of the film. Further, the layer C of the base material film has a thickness of preferably not more than 30 um, and more preferably not more than 20 μm, from the viewpoint of enhancing the rigidity of the film.

In the base material film, the thickness ratio among layers of layer A/layer B/layer C is preferably 1/1/1 to 1/15/1, more preferably 1/2/1 to 1/10/1, and even more preferably 1/2/1 to 1/6/1.

The layer D of the sealant film has a thickness of not less than 10 μm and not more than 150 μm, more preferably not less than 20 μm, and even more preferably not less than 30 μm, from the viewpoint of enhancing the impact strength. Further, the layer D of the sealant film has a thickness of preferably not more than 100 um, and more preferably not more than 80 μm, from the viewpoint of enabling a reduction of the amount of the ethylene polymer (D) used.

The layer E of the sealant film has a thickness of not less than 10 μm and not more than 150 μm, more preferably not less than 20 μm, and even more preferably not less than 30 μm, from the viewpoint of enhancing the heat seal peel strength. Further, the layer E of the sealant film has a thickness of preferably not more than 100 μm, and more preferably not more than 80 um, from the viewpoint of enabling a reduction of the amount of the ethylene polymer (E) used.

Further, the layer F of the sealant film has a thickness of preferably not less than 10 um and not more than 150 μm, and more preferably not less than 30 um, from the viewpoint of enhancing the falling body strength, and the layer F of the sealant film has a thickness of preferably not more than 100 μm, and more preferably not more than 80 μm, from the viewpoint of enabling a reduction of the amount of the ethylene polymer (D) used.

In the sealant film, the thickness ratio between layers of layer D/layer E is preferably 1/10 to 5/1, more preferably 1/5 to 3/1, and even more preferably 1/3 to 2/1. When the layer D, the layer F, and the layer E are formed in the sealant film, the thickness ratio among the layers is such that the ratio of a total of the thickness of the layer D and the thickness of the layer E/the thickness of the layer F is preferably 1/5 to 10/1, more preferably 1/3 to 5/1, and even more preferably 1/2 to 3/1.

A method for producing the base material film and the sealant film is not particularly limited and includes known film production methods. Examples of the known film production methods include extrusion methods such as an inflation method using an inflation film production apparatus and a T-die method using a T-die cast film production apparatus.

When the T-die method is used, the resin processing temperature is 180°C to 300°C, and the chilled roll temperature is 20°C to 80°C.

When the inflation method is used, a tackiness agent such as polybutene may be added to the resin compositions for forming the layer A, the layer B, the layer C, the layer D, the layer E, and the layer F. Examples of a method for adding polybutene include a method of using a raw material obtained by compounding polybutene in advance with a Banbury kneader or the like, and a method of injecting polybutene into an extruder. The concentration of polybutene is 0.5% by mass to 20% by mass, and polybutene may be added to all of the three layers of the base material film, only both outer layers (the layer A and the layer C), or only the intermediate layer (the layer B) and may be added to all of the layers (the layer D, the layer E, and the layer F) of the sealant film or any (for example, only the layer F) of the layers of the sealant film. As the polybutene, commercially available products may be used, such as HV35 manufactured by Nippon Petrochemical Co., Ltd., and polybutene 100H manufactured by Idemitsu Petrochemical Co., Ltd.

Before the base material film and the layer D are formed on top of each other with one or more layers selected from the group consisting of the barrier layer and the adhesive layer interposed between the base material film and the layer D, the surface of the base material film on the layer C side thereof is preferably subjected to a corona treatment (step of subjecting the surface of the layer C to a corona treatment). This makes it possible to enhance the adhesive strength between the layer C and the barrier layer or the adhesive layer.

As for a method for forming the barrier layer, for example, a layer made from silicon oxide, alumina, spinel, or the like is preferably formed by vapor deposition. Further, the barrier layer formed from a composition containing the inorganic layered compound and the polyvinyl alcohol-based resin may be formed by applying and drying the composition.

A method for forming the base material film (layer A/layer B/layer C) and the sealant film (layer D/layer E or layer D/layer F/layer E) on top of each other is preferably selected as appropriate depending on whether or not the adhesive layer is formed. When the adhesive layer is formed, examples of the method include a method in which a dry lamination method or an extrusion lamination method is used to form the sealant film shaped in advance.

In the dry lamination method, for example, an aqueous or solvent type adhesive agent for dry lamination is applied to the corona-treated surface or the surface on the barrier layer side of the layer C of the base material film, and dried to form an adhesive layer. This makes it possible to bond the layer C of the base material film and the layer D of the sealant film to each other by the dry lamination method. Here, the surface of the layer D of the sealant film on the side facing the base material film, as in the case of the layer C of the base material film, is preferably subjected to a corona treatment (step of subjecting the surface of the layer D to a corona treatment).

In the extrusion lamination method (sandwich lamination method), a solventless type adhesive agent for lamination is melt-extruded between the layer C of the base material film or the barrier layer and the layer D of the sealant film to form an adhesive layer. This makes it possible to bond the layer C of the base material film and the layer D of the sealant film to each other with the adhesive layer interposed therebetween.

Further, when the adhesive layer is not formed, shaping of the layer D and the layer E or shaping of the layer D, the layer F, and the layer E is preferably carried out by a solventless lamination method, in which a resin composition for shaping the layer D containing the ethylene polymer (D), a resin composition for shaping the layer E containing the ethylene polymer (E), and a resin composition for shaping the layer F containing the ethylene polymer (F) are melt-extruded on the layer C of the base material film or on the barrier layer. In this way, it is possible to shape the sealant layer.

<Applications for which laminated film is used>

The laminated film in accordance with an aspect of the present invention has high rigidity and high thermal shrinkage resistance without including, for example, a polyethylene terephthalate (PET) film or a polyamide film formed thereon. Therefore, the laminated film in accordance with the aspect can be suitably used as, for example, a packaging bag and a packaging container for storing food, detergent, cosmetics, or the like. In addition, since the base material layer and the sealant layer can be shaped from an ethylene polymer, the laminated film can be suitably used as a mono-material package that can be reused without separating the base material layer and the sealant layer.

<Recycling method>

The laminated film in accordance with an aspect of the present invention may be used as, for example, a container for food, detergent, cosmetics, or the like, and then recovered and recycled. The laminated film may be recycled by, for example, subjecting the recovered container to washing with a solvent such as water or alcohol and drying, then melting the container, and pelletizing a resulting melt. The melting of the container and the pelletization can be performed without separating all the layers of the laminated film. Obtained pellets and an ethylene polymer masterbatch having an inorganic filler content different from that of the pellets may be mixed and melted to adjust the concentration of the inorganic filler. As an ethylene polymer used in the masterbatch, any of the ethylene polymer (A), the ethylene polymer (B), the ethylene polymer (C), and the ethylene polymer (D) may be selected.

The recycled resin material containing the ethylene polymer can be suitably used as, for example, a shaping material for food, detergent, and cosmetics applications.

The present invention is not limited to the embodiments, but can be altered by a skilled person in the art within the scope of the claims. The present invention also encompasses, in its technical scope, any embodiment derived by combining technical means disclosed in differing embodiments.

Examples

The following description will discuss embodiments of the present invention in more detail with reference to Examples. Note, however, that the present invention is not limited to these Examples.

(1) Methods for measuring various physical properties of an ethylene polymer are as follows.

(1-1) Content (unit: mol%) of structural unit derived from ethylene in ethylene polymer

A 100-$\mu$m press sheet was prepared for a standard sample of an ethylene-hexene copolymer with a known number of short chain branches and was subjected to measurement of infrared absorption intensity with 16 times of integration and at a resolution of 4 cm$^{-1}$ with use of FT-IR480 manufactured by JASCO Corporation. A baseline was created by connecting 1700 cm$^{-1}$ and 920 cm$^{-1}$ of an obtained spectrum. The peak intensity at 1378 cm$^1$ (I1S) and the peak intensity at 1303 cm$^{-1}$ (I2S) of the obtained spectrum were read, and the peak intensity at 1378 cm$^{-1}$ (Io1S) and the peak intensity at 1303 cm$^{-1}$ (Io2S) of the baseline were read, and the coefficient f was determined by using the following formula:

f = (number of short chain branches in 1000C of standard sample)/0.67 {{K1S} - 0.95 (K2S) + 3.8}, wherein K1S = Log(Io1S/I1S)/density of standard sample/sheet thickness (pm), and K2S = Log(Io2S/I2S)/density of standard sample/sheet thickness ($\mu$m).

Next, a 100-$\mu$m press sheet was prepared for a sample with an unknown number of short chain branches and was subjected to measurement of infrared absorption intensity with 16 times of integrations and at a resolution of 4 cm$^{-1}$ with use of an FT-IR480 manufactured by JASCO Corporation. A baseline was created by connecting 1700 cm$^{-1}$ and 920 cm$^{-1}$ of an obtained spectrum. The peak intensity at 1378 cm$^{-1}$ (I1) and the peak intensity at 1303 cm$^{-1}$ (I2) of the obtained spectrum were read, and the peak intensity at 1378 cm$^{-1}$ (Io1) and the peak intensity at 1303 cm$^{-1}$ (Io2) of the baseline were read, and CH$_3$/1000C was calculated by using the following formula:

$$CH_3/1000C = 0.67 \times f \times ((K1) - 0.95 \times (K2) + 3.8),$$

wherein K1 = Log(Io1/I1)/density of sample/sheet thickness ($\mu$m), and

$$K2 = Log(Io2/I2)/density\ of\ sample/sheet\ thickness\ (\mu m).$$

When the short chain branch is propylene, a value obtained by multiplying an obtained CH$_3$/1000C by 0.60 was regarded as the short chain branching degree in 1000 carbon atoms.

When the short chain branch is hexene, a value obtained by multiplying an obtained CH$_3$/1000C by 1.13 was regarded as the short chain branching degree in 1000 carbon atoms. When the short chain branch is octene, a value obtained by multiplying an obtained CH$_3$/1000C by 1.10 was regarded as the short chain branching degree in 1000 carbon atoms. When the short chain branch is 4-methylpentene-1, a value obtained by multiplying an obtained CH$_3$/1000C by 0.62 was regarded as the short chain branching degree in 1000 carbon atoms. When the short chain branch is other than propylene, hexene, octene, or 4-methylpentene, an obtained value of CH$_3$/1000 was regarded as the short chain branching degree in 1000 carbon atoms.

With use of the short chain branching degree in 1000 carbon atoms, the content of a structural unit derived from ethylene in an ethylene polymer was calculated by the following formula:

Content (mol%) of structural unit derived from ethylene in ethylene polymer = (1000 - short chain branching degree in 1000 carbon atoms)/10

(1-2) Density (unit: Kg/m$^3$) of ethylene polymer

An annealing treatment described in JIS K6760-1995 was performed, and then the density (unit: kg/m$^3$) of an ethylene polymer was measured according to Method A described in JIS K7112-1980.

(1-3) Melt flow rate (MFR, unit: g/10 min) of ethylene polymer

The MFR (unit: g/10 min) of an ethylene polymer was measured according to JIS K7210-1-2014 under conditions of a temperature of 190°C and a load of 21.18 N.

(2) Materials used in Examples and Comparative Examples are as follows.

(2-1) Ethylene polymer

· Ethylene polymer 1

Ethylene-$\alpha$-olefin copolymer, manufactured by Keiyo Polyethylene Co., Ltd., trade name: "G2500", structural unit derived from ethylene: 99.2 mol%, density: 960 kg/m$^3$, MFR: 5 g/10 min.

· Ethylene polymer 2

Ethylene-$\alpha$-olefin copolymer, manufactured by Keiyo Polyethylene Co., Ltd., trade name: "E8080", structural unit derived from ethylene: 99.1 mol%, density: 958 kg/m$^3$, MFR: 1.0 g/10 min.

· Ethylene polymer 3

Ethylene-hexene copolymer, manufactured by Sumitomo Chemical Co., Ltd., trade name: "SUMIKATHENE E (registered trademark) FV205", production method: gas phase polymerization using a metallocene catalyst, structural unit derived from ethylene: 98.9 mol%, density: 921 kg/m$^3$, MFR: 2.2 g/10 min.

· Ethylene polymer 4

Ethylene-hexene copolymer, manufactured by Sumitomo Chemical Co., Ltd., trade name: "EXCELLEN FX (registered trademark) FX307", production method: gas phase polymerization using a metallocene catalyst, structural unit derived from ethylene: 95.5 mol%, density: 890 kg/m$^3$, MFR: 3.2 g/10 min.

· Ethylene polymer 5

Ethylene-hexene copolymer, manufactured by Sumitomo Chemical Co., Ltd., trade name: "SUMIKATHENE E (registered trademark) FV104", production method: gas phase polymerization using a metallocene catalyst, structural unit derived from ethylene: 98.0 mol%, density: 915 kg/m$^3$, MFR: 1.0 g/10 min.

· Ethylene polymer 6

Ethylene-hexene copolymer, manufactured by Sumitomo Chemical Co., Ltd., trade name: "EXCELLEN GMH (registered trademark) GH030", production method: gas phase polymerization using a metallocene catalyst, structural unit derived from ethylene: 96.9 mol%, density: 912 kg/m$^3$, MFR: 0.5 g/10 min.

· Ethylene polymer 7

Ethylene-hexene copolymer, manufactured by Sumitomo Chemical Co., Ltd., trade name: "SUMIKATHENE E (registered trademark) FV201", production method: gas phase polymerization using a metallocene catalyst, structural unit derived from ethylene: 98.1 mol%, density: 916 kg/m$^3$, MFR: 2.3 g/10 min.

· Inorganic filler 1

Talc, manufactured by Asada Milling Co., Ltd., trade name: "JM620P", median diameter (d50): 5 μm.

(2-3) Adhesive agent

· Adhesive agent 1

Dry lamination adhesive agent (production method: obtained by mixing 12 parts by mass of TAKELAC (registered trademark) A310 (manufactured by Mitsui Chemicals, Inc.), 1 part by mass of TAKENATE (registered trademark) A-3 (manufactured by Mitsui Chemicals, Inc.), and 32 parts by mass of ethyl acetate)

(3) Methods for evaluating various physical properties of a film are as follows.

(3-1) Impact strength (unit: kJ/m$^2$)

A film was punched by an ASTM Type S dumbbell-shaped cutting die to obtain a test piece for impact strength evaluation having a size of 63.5 mm × 9.5 mm. With use of an impact test device (CIT-150-T-20) manufactured by Orientec Corporation, the test piece was subjected to an impact strength test under an atmosphere of 23°C and a humidity of 50% under the following conditions: a grip interval of 20 mm, a hammer nominal energy of 15 kgf·cm, a hammer swing-up angle of 150°, and an impact speed of 3.8 m/sec. The energy was calculated from an area of a tension-stress curve obtained by the impact strength test and was divided by a cross-sectional area of the test piece to determine the impact strength. Note that a test piece cut out so that the feeding direction during film production corresponds to a long-side direction of the test piece was used as a test piece in the machine direction (MD).

(3-2) Heat seal peel strength (unit: N/15 mm)

The same films were layered on top of each other, and, with use of a heat sealer (TP-701S manufactured by Tester Sangyo Co., Ltd.) equipped with a 10-mm-wide heat seal bar, heat sealing was carried out by pressure-bonding the films together for 1 second at a predetermined heat seal bar temperature and under a pressure of 1 kPa while the direction of the heat seal bar was aligned with the TD direction of the films. After the heat-sealed films were conditioned at 23°C and at a humidity of 50% for a whole day and night, the films were cut out so that the width of a heat-sealed part was 15 mm. Opposite non-sealed parts of the two heat-sealed films were set in a chuck of a tensile tester (manufactured by Orientec Co., Ltd.), and peeling was carried out at 23°C, at a humidity of 50%, at a peeling speed of 200 mm/min, and at a peeling angle of 180 degrees to measure the heat seal peel strength. The above test was carried out at a temperature of the heat seal bar of 140°C.

[Example 1]

With use of a super mixer (manufactured by Kawata MFG Co., Ltd., trade name: "SMV-100"), 30 parts by mass of the ethylene polymer 1, 70 parts by mass of the inorganic filler 1, 0.2 parts by mass of a lubricant 1, and 0.2 parts by mass of an antioxidant 1 were stirred at a temperature of 190°C under a nitrogen gas atmosphere to obtain a mixture. The obtained mixture was melt-kneaded at a temperature of 220°C to 240°C and at a screw rotation speed of 100 rpm with use of a co-directional twin screw extruder (manufactured by Kobe Steel, Ltd., trade name: "KTX-37", screw diameter: 37 mmcp) to obtain a masterbatch pellet 1 (MB1).

A small-scale multi-layer T-die (manufactured by SHI Modern Machinery, Ltd.) was used to shape a three-layer T-die film having a layer configuration of a layer A (ethylene polymer 2: 100 parts by mass, thickness: 6 $\mu$m)/a layer B (masterbatch pellet 1: 43 parts by mass, ethylene polymer 1: 57 parts by mass, thickness: 13 $\mu$m)/a layer C (masterbatch pellet 1: 5 parts by mass, ethylene polymer 3: 95 parts by mass, thickness: 6 um). Then, the surface of the obtained film on the layer C side thereof was subjected to a corona treatment to obtain a T-die film 1 (TF1). Shaping conditions and corona treatment conditions were as follows.

<Shaping conditions>

- Extruder: $\varphi$50 mm $\times$ 2 extruders and $\varphi$40 mm $\times$ 1 extruder
- Die opening length: 600 mm
- Lip: 1.2 mm
- Processing temperature for layer A: 230°C
- Extrusion condition for layer A: 2.5 kg/h
- Processing temperature for layer B: 210°C
- Extrusion condition for layer B: 5 kg/h
- Processing temperature for layer C: 230°C
- Extrusion condition for layer C: 2.5 kg/h

<Corona treatment conditions>

- Corona treatment apparatus: AGF-B 10 type manufactured by Wedge Co., Ltd.
- Corona output: 0.15 kW

A three-layer coextrusion inflation film-shaping machine (manufactured by Placo Co., Ltd.) was used to shape a two-layer inflation film having a layer configuration of a layer D (ethylene polymer 3: 95 parts by mass, masterbatch pellet 1: 5 parts by mass, thickness: 80 $\mu$m)/a layer E (ethylene polymer 4: 100 parts by mass, thickness: 40 $\mu$m). Then, the surface of the obtained film on the layer D side thereof was subjected to a corona treatment to obtain an inflation film 1 (IF1). Shaping conditions and corona treatment conditions were as follows.

<Shaping conditions>

- Extruder: $\varphi$50 mm $\times$ 3 extruders
- Die: $\varphi$150 mm, lip: 2.0 mmt
- Set temperature of die: 180°C to 190°C
- Processing temperature for layer D: 180°C to 190°C

- Extrusion condition for layer D: 20 kg/h
- Processing temperature for layer E: 180°C to 190°C
- Extrusion condition for layer E: 10 kg/h
- Diameter in folded state: 470 mm

<Corona treatment conditions>

- Corona treatment apparatus: AGF-B 10 type manufactured by Wedge Co., Ltd.
- Corona output: 0.2 kW

The corona-treated surface of the T-die film 1 and the corona-treated surface of the inflation film 1 were bonded to each other with the dry lamination adhesive agent 1 therebetween by a dry lamination method to obtain a laminated film 1 having a six-layer configuration of a layer A/layer B/layer C/adhesive agent layer/layer D/layer E.

[Example 2]

A T-die film 2 (TF2) was obtained under the same conditions as in Example 1 except that used for the layer A was a mixture obtained by dry-blending 95 parts by mass of the ethylene polymer 2 and 5 parts by mass of the masterbatch pellet 1, instead of 100 parts by mass of the ethylene polymer 2.
The corona-treated surface of the T-die film 2 and the corona-treated surface of the inflation film 1 were bonded to each other with the dry lamination adhesive agent 1 therebetween by a dry lamination method to obtain a laminated film 2 having a six-layer configuration of a layer A/layer B/layer C/adhesive agent layer/layer D/layer E.

[Example 3]

An inflation film 2 (IF2) was obtained, and a laminated film 3 was obtained in the same manner as in Example 1 except that used for the layer D were 93 parts by mass of the ethylene polymer 3 and 7 parts by mass of the masterbatch pellet 1, instead of 95 parts by mass of the ethylene polymer 3 and 5 parts by mass of the masterbatch pellet 1.

[Example 4]

An inflation film 3 (IF3) was obtained, and a laminated film 4 was obtained in the same manner as in Example 1 except that used for the layer D were 86 parts by mass of the ethylene polymer 3 and 14 parts by mass of the masterbatch pellet 1, instead of 95 parts by mass of the ethylene polymer 3 and 5 parts by mass of the masterbatch pellet 1.

[Example 5]

An inflation film 4 (IF4) was obtained, and a laminated film 5 was obtained in the same manner as in Example 1 except that used for the layer D were 79 parts by mass of the ethylene polymer 3 and 21 parts by mass of the masterbatch pellet 1, instead of 95 parts by mass of the ethylene polymer 3 and 5 parts by mass of the masterbatch pellet 1.

[Example 6]

A three-layer coextrusion inflation film-shaping machine (manufactured by Placo Co., Ltd.) was used to shape a three-layer inflation film having a layer configuration of a layer D (ethylene polymer 3: 95 parts by mass, masterbatch pellet 1: 5 parts by mass, thickness: 40 μm)/a layer F (ethylene polymer 5: 50 parts by mass, ethylene polymer 6: 50 parts by mass, thickness: 40 μm)/a layer E (ethylene polymer 4: 100 parts by mass, thickness: 40 μm). Then, the surface of the obtained film on the layer D side thereof was subjected to a corona treatment under the same conditions as those for the inflation film 1 to obtain an inflation film 5.

<Shaping conditions>

- Extruder: φ50 mm × 3 extruders
- Die: φ150 mm, lip: 2.0 mmt

- Set temperature of die: 180°C to 190°C
- Processing temperature for layer D: 180°C to 190°C
- Extrusion condition for layer D: 10 kg/h
- Processing temperature for layer F: 180°C to 190°C
- Extrusion condition for layer F: 10 kg/h
- Processing temperature for layer E: 180°C to 190°C
- Extrusion condition for layer E: 10 kg/h
- Diameter in folded state: 470 mm

The corona-treated surface of the T-die film 1 and the corona-treated surface of the inflation film 5 were bonded to each other with the dry lamination adhesive agent 1 therebetween by a dry lamination method to obtain a laminated film 6 having a seven-layer configuration of a layer A/layer B/layer C/adhesive agent layerlayer D/layer Flayer E.

[Example 7]

An inflation film 6 (IF6) was obtained, and a laminated film 7 was obtained in the same manner as in Example 6 except that used for the layer E was 100 parts by mass of the ethylene polymer 7, instead of 100 parts by mass of the ethylene polymer 4.

[Comparative Example 1]

An inflation film 7 (IF7) was obtained, and a laminated film 8 was obtained in the same manner as in Example 1 except that used for the layer D were 57 parts by mass of the ethylene polymer 3 and 43 parts by mass of the masterbatch pellet 1, instead of 95 parts by mass of the ethylene polymer 3 and 5 parts by mass of the masterbatch pellet 1.

[Comparative Example 2]

A three-layer coextrusion inflation film-shaping machine (manufactured by Placo Co., Ltd.) was used to shape an inflation film 8 (IF8) having a layer configuration of a layer D (ethylene polymer 7: 100 parts by mass, thickness: 120 $\mu$m). Then, the surface of the obtained inflation film 8 was subjected to a corona treatment under the same conditions as those for the inflation film 1.

<Shaping conditions>

- Extruder: $\varphi$50 mm $\times$ 3 extruders
- Die: $\varphi$150 mm, lip: 2.0 mmt
- Set temperature of die: 180°C to 190°C
- Processing temperature for layer D: 180°C to 190°C
- Extrusion condition for layer D: 30 kg/h
- Diameter in folded state: 470 mm

The corona-treated surface of the T-die film 1 and the corona-treated surface of the inflation film 8 were bonded to each other with the dry lamination adhesive agent 1 therebetween by a dry lamination method to obtain a laminated film 9 having a five-layer configuration of a layer A/layer B/layer C/adhesive agent layer/layer D.

Table 1 shows the components and layer configurations of the T-die films (TF) 1 and 2.
Table 2 shows the components and layer configurations of the inflation films (IF) 1 to 4.
Table 3 shows the components and layer configurations of the inflation films (IF) 5 to 8.
Table 4 shows the components, layer configurations, and physical property evaluation results of the laminated films 1 to 9.

[Table 1]

| | | | | T-die film 1 (TF1) | T-die film 2 (TF2) |
|---|---|---|---|---|---|
| Layer A | MB1 | | Ethylene polymer 1 / part by mass | - | 1.5 |
| | | | Inorganic filler / part by mass | - | 3.5 |
| | Total amount of MB1 / part by mass | | | - | 5 |
| | Ethylene polymer 2 / part by mass | | | 100 | 95 |
| | Total amount of ethylene polymers / part by mass | | | 100 | 96.5 |
| | Total amount of inorganic filler / part by mass | | | 6 | 3.5 |
| | Thickness / $\mu$m | | | | 6 |
| Layer B | MB1 | | Ethylene polymer 1 / part by mass | 13 | 13 |
| | | | Inorganic filler / part by mass | 30 | 30 |
| | Total amount of MB / part by mass | | | 43 | 43 |
| | Ethylene polymer 1 / part by mass | | | 57 | 57 |
| | Total amount of ethylene polymers / part by mass | | | 70 | 70 |
| | Total amount of inorganic filler / part by mass | | | 30 | 30 |
| | Thickness / $\mu$m | | | 13 | 13 |
| Layer C | MB1 | | Ethylene polymer 1 / part by mass | 1.5 | 1.5 |
| | | | Inorganic filler / part by mass | 3.5 | 3.5 |
| | Total amount of MB / part by mass | | | 5 | 5 |
| | Ethylene polymer 3 / part by mass | | | 95 | 95 |
| | Total amount of ethylene polymers / part by mass | | | 96.5 | 96.5 |
| | Total amount of inorganic filler / part by mass | | | 3.5 | 3.5 |
| | Thickness / $\mu$m | | | 6 | 6 |

[Table 2]

| | | | Inflation film 1 (IF1) | Inflation film 2 (IF2) | Inflation film 3 (IF3) | Inflation film 4 (IF4) |
|---|---|---|---|---|---|---|
| Layer D | MB1 | polymer 1 / part by mass | 1.5 | 2.1 | 4.2 | 6.3 |
| | | Ethylene Inorganic filler / part by mass | 3.5 | 4.9 | 9.8 | 14.7 |
| | | Total amount of MB / part by mass | 5.0 | 7.0 | 14 | 21 |
| | Ethylene polymer 3 / part by mass | | 95 | 93 | 86 | 79 |
| | Total amount of ethylene polymers / part by mass | | 96.5 | 95.1 | 90.2 | 85.3 |
| | Total amount of inorganic filler / part by mass | | 3.5 | 4.9 | 9.8 | 14.7 |
| | Thickness / $\mu$m | | 80 | 80 | 80 | 80 |

(continued)

|  |  | Inflation film 1 (IF1) | Inflation film 2 (IF2) | Inflation film 3 (IF3) | Inflation film 4 (IF4) |
|---|---|---|---|---|---|
| Layer F | Ethylene polymer 4 / part by mass | - | - | - | - |
| | Ethylene polymer 5 / part by mass | - | - | - | - |
| | Ethylene polymer 6 / part by mass | - | - | - | - |
| | Thickness | - | - | - | - |
| Layer E | Ethylene polymer 4 / part by mass | 100 | 100 | 100 | 100 |
| | Thickness / μm | 40 | 40 | 40 | 40 |

[Table 3]

|  |  |  | Inflation film 5 (IF5) | Inflation film 6 (IF6) | Inflation film 7 (IF7) | Inflation film 8 (IF8) |
|---|---|---|---|---|---|---|
| Layer D | MB1 | Ethylene polymer 1 / part by mass | 1.5 | 1.5 | 12.9 | - |
| | | Inorganic filler / part by mass | 3.5 | 3.5 | 30.1 | - |
| | | Total amount of MB / part by mass | 5.0 | 5.0 | 43 | - |
| | Ethylene polymer 3 / part by mass | | 95 | 95 | 57 | - |
| | Ethylene polymer 7 / part by mass | | - | - | - | 100 |
| | Total amount of ethylene polymers / part by mass | | 96.5 | 96.5 | 69.9 | - |
| | Total amount of inorganic filler / part by mass | | 3.5 | 3.5 | 30.1 | - |
| | Thickness / μm | | 40 | 40 | 80 | 120 |
| Layer F | Ethylene polymer 4 / part by mass | | - | - | - | - |
| | Ethylene polymer 5 / part by mass | | 50 | 50 | - | - |
| | Ethylene polymer 6 / part by mass | | 50 | 50 | - | - |
| | Thickness / μm | | 40 | 40 | - | - |
| Layer E | Ethylene polymer 4 / part by mass | | 100 | - | 100 | - |
| | Ethylene polymer 7 / part by mass | | - | 100 | - | - |
| | Thickness / μm | | 40 | 40 | 40 | - |

[Table 4]

| | | Example 1 | Example 2 | Example 3 | Example 4 | Example 5 | Example 6 | Example 7 | Comparative Example 1 | Comparative Example 2 |
|---|---|---|---|---|---|---|---|---|---|---|
| Laminated film No. | | 1 | 2 | 3 | 4 | 5 | 6 | 7 | 8 | 9 |
| Layer configuration | IT-die film | TF1 | TF2 | TF1 | TF1 | TF1 | TF1 | TF1 | TF1 | TF1 |
| | Adhesive layer | Dry lamination adhesive agent 1 | | | | | | | | |
| | Inflation film | IF1 | IF1 | IF2 | IF3 | IF4 | IF5 | IF6 | IF7 | IF8 |
| Result | Impact strength in MD direction (unit: kJ/m$^2$) | 1121 | 1068 | 1168 | 1094 | 1131 | 1056 | 1110 | 543 | 990 |
| | Heat seal peel strength (unit: N15mm) at 140°C | 36 | 35 | 35 | 36 | 37 | 36 | 24 | 39 | 24 |

[Example 8]

An inflation film 9 (IF9) was obtained, and a laminated film 10 was obtained in the same manner as in Example 1 except that used for the layer D were 99 parts by mass of the ethylene polymer 3 and 1 part by mass of the masterbatch pellet 1, instead of 95 parts by mass of the ethylene polymer 3 and 5 parts by mass of the masterbatch pellet 1.

[Example 9]

An inflation film 10 (IF10) was obtained, and a laminated film 11 was obtained in the same manner as in Example 1 except that used for the layer D were 97 parts by mass of the ethylene polymer 3 and 3 parts by mass of the masterbatch pellet 1, instead of 95 parts by mass of the ethylene polymer 3 and 5 parts by mass of the masterbatch pellet 1.

Table 5 shows the components and layer configurations of the inflation films (IF) 9 and 10.
Table 6 shows the components, layer configurations, and physical property evaluation results of the laminated films 10 and 11.

[Table 5]

| | | | Inflation film 1 (IF9) | Inflation film 2 (IF10) |
|---|---|---|---|---|
| Layer D | MB1 | Ethylene polymer 1 / part by mass | 10.3 | 0.9 |
| | | Inorganic filler / part by mass | 0.7 | 2.1 |
| | | Total amount of MB / part by mass | 1.0 | 3.0 |
| | Ethylene polymer 3 / part by mass | | 99 | 97.0 |
| | Total amount of ethylene polymers / part by mass | | 99.3 | 97.9 |
| | Total amount of inorganic filler / part by mass | | 0.7 | 2.1 |
| | Thickness / $\mu$m | | 80 | 80 |
| Layer F | Ethylene polymer 4 / part by mass | | - | - |
| | Ethylene polymer 5 / part by mass | | - | - |
| | Ethylene polymer 6 / part by mass | | - | - |
| | Thickness | | - | - |
| Layer E | Ethylene polymer 4 / part by mass | | 100 | 100 |
| | Thickness / $\mu$m | | 40 | 40 |

[Table 6]

| | | | Example 8 | Example 9 |
|---|---|---|---|---|
| Laminated film No. | | | 10 | 11 |
| Layer configuration | | T-die film | TF1 | TF1 |
| | | Adhesive layer | Dry lamination adhesive agent 1 | |
| | | Inflation film | IF9 | IF10 |
| Result | | Impact strength in MD direction (unit: kJ/m$^2$) | 1037 | 1050 |
| | | Heat seal peel strength (unit: N/15 mm) at 140°C | 36 | 36 |

Industrial Applicability

A laminated film in accordance with an aspect of the present invention exhibits favorable impact strength and is suitably used for various packaging materials suitable for material recycling, for example, food packaging materials.

**Claims**

1. A laminated film comprising:

a layer A containing an ethylene polymer (A) containing a structural unit derived from ethylene in an amount of not less than 80 mol%;
a layer B containing an ethylene polymer (B) and an inorganic filler (A), the ethylene polymer (B) containing a structural unit derived from ethylene in an amount of not less than 70 mol%;
a layer C containing an ethylene polymer (C) containing a structural unit derived from ethylene in an amount of not less than 70 mol%;
one or more layers selected from the group consisting of a barrier layer and an adhesive layer;
a layer D containing an ethylene polymer (D) and an inorganic filler (B), the ethylene polymer (D) containing a structural unit derived from ethylene in an amount of not less than 70 mol%, the layer D having a content of the ethylene polymer (D) of not less than 75% by mass and less than 99.5% by mass and a content of the inorganic filler (B) of not less than 0.5% by mass and less than 25% by mass with respect to a total content of the ethylene polymer (D) and the inorganic filler (B) of 100% by mass; and
a layer E containing an ethylene polymer (E) containing a structural unit derived from ethylene in an amount of not less than 70 mol%,
wherein the layers are formed on top of each other in any of the following orders:

an order of the layer A, the layer B, the layer C, the barrier layer, the layer D, and the layer E;
an order of the layer A, the layer B, the layer C, the adhesive layer, the layer D, and the layer E;
an order of the layer A, the layer B, the layer C, the barrier layer, the adhesive layer, the layer D, and the layer E; and
an order of the layer A, the layer B, the layer C, the adhesive layer, the barrier layer, the layer D, and the layer E.

2. The laminated film according to claim 1, wherein the ethylene polymer (E) has a density of not less than 880 kg/m$^3$ and less than 910 kg/m$^3$ and has a melt flow rate of not less than 0.01 g/ 10 min and less than 5 g/10 min as measured at a temperature of 190°C and under a load of 21.18 N.

3. The laminated film according to claim 1 or 2, wherein

said laminated film comprises a layer F containing an ethylene polymer (F), the layer F being formed between the layer D and the layer E, and
the ethylene polymer (F) has a density of not less than 910 kg/m$^3$ and less than 930 kg/m$^3$.

4. The laminated film according to any one of claims 1 to 3, wherein

the layer D contains the ethylene polymer (D), an ethylene polymer (G), and the inorganic filler (B),
the ethylene polymer (G) has a density of not less than 940 kg/m$^3$ and less than 970 kg/m$^3$, and
the layer D has a content of the ethylene polymer (G) of not less than 0.1 parts by mass and not more than 20 parts by mass with respect to a total content of the ethylene polymer (D) and the inorganic filler (B) of 100 parts by mass.

5. The laminated film according to any one of claims 1 to 4, wherein the inorganic filler (A) and the inorganic filler (B) are each one or more fillers selected from the group consisting of calcium carbonate, kaolin, metakaolin, hydrotalcite, mica, talc, and fibrous basic magnesium sulfate particles.

6. The laminated film according to any one of claims 1 to 5, wherein

the ethylene polymer (A) has a density of not less than 930 kg/m$^3$ and less than 970 kg/m$^3$ and has a melt flow rate of not less than 0.01 g/10 min and less than 3 g/10 min as measured at a temperature of 190°C and under a load of 21.18 N,
the ethylene polymer (B) has a density of not less than 930 kg/m$^3$ and less than 970 kg/m$^3$ and has a melt flow rate of not less than 3 g/10 min and less than 25 g/10 min as measured at a temperature of 190°C and under a load of 21.18 N,
the ethylene polymer (C) has a density of not less than 900 kg/m$^3$ and less than 970 kg/m$^3$ and has a melt flow rate of not less than 0.01 g/10 min and less than 3 g/10 min as measured at a temperature of 190°C and under a load of 21.18 N,

the ethylene polymer (D) has a density of not less than 900 kg/m$^3$ and less than 930 kg/m$^3$ and has a melt flow rate of not less than 0.01 g/10 min and less than 3 g/10 min as measured at a temperature of 190°C and under a load of 21.18 N, and

the ethylene polymer (E) has a density of not less than 880 kg/m$^3$ and less than 930 kg/m$^3$ and has a melt flow rate of not less than 0.01 g/10 min and less than 3 g/10 min as measured at a temperature of 190°C and under a load of 21.18 N.

7. The laminated film according to any one of claims 1 to 6, wherein

the layer A has a thickness of not less than 5 μm and not more than 30 μm,
the layer B has a thickness of not less than 10 μm and not more than 60 μm, and
the layer C has a thickness of not less than 5 μm and not more than 30 μm.

8. The laminated film according to any one of claims 1 to 7, wherein the layer D has a thickness of not less than 10 μm and not more than 150 μm, and the layer E has a thickness of not less than 10 μm and not more than 150 μm.

9. The laminated film according to any one of claims 1 to 8, wherein

the barrier layer is a barrier layer containing one or more barrier agents selected from the group consisting of silicon oxide, alumina, spinel, and a composition of a polyvinyl alcohol-based resin and an inorganic layered mineral, and

the adhesive layer is an adhesive layer containing one or more adhesive agents selected from the group consisting of a polyurethane-based adhesive agent, a polyester-based adhesive agent, an imine-based adhesive agent, and a titanate-based adhesive agent.

10. A method for producing the laminated film according to any one of claims 1 to 9, the method comprising the steps of: subjecting a surface of the layer C to a corona treatment; and subjecting a surface of the layer D to a corona treatment.

## INTERNATIONAL SEARCH REPORT

| International application No. |
|---|
| **PCT/JP2022/025331** |

### A. CLASSIFICATION OF SUBJECT MATTER

***B32B 27/32***(2006.01)i; ***B65D 65/40***(2006.01)i
FI: B32B27/32 E; B65D65/40 D

According to International Patent Classification (IPC) or to both national classification and IPC

### B. FIELDS SEARCHED

Minimum documentation searched (classification system followed by classification symbols)

B32B1/00-43/00; B65D65/00-65/46

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2021/049182 A1 (SUMITOMO CHEMICAL CO., LTD.) 18 March 2021 (2021-03-18)<br>claims, paragraph [0070] | 1-10 |
| Y | JP 01-216839 A (IDEMITSU PETROCHEM. CO., LTD.) 30 August 1989 (1989-08-30)<br>examples 1-5, 7-9, 11-12 | 1-10 |
| Y | JP 2019-119174 A (TOPPAN PRINTING CO., LTD.) 22 July 2019 (2019-07-22)<br>claims 1, 4, 7 | 1-10 |
| Y | JP 2018-062075 A (TOPPAN PRINTING CO., LTD.) 19 April 2018 (2018-04-19)<br>example 5 | 1-10 |
| Y | JP 2019-085127 A (TOPPAN PRINTING CO., LTD.) 06 June 2019 (2019-06-06)<br>paragraphs [0011], [0014] | 1-10 |
| Y | JP 11-034253 A (SEKISUI CHEM. CO., LTD.) 09 February 1999 (1999-02-09)<br>paragraph [0037] | 1-10 |
| Y | JP 08-003383 A (SUMITOMO CHEM. CO., LTD.) 09 January 1996 (1996-01-09)<br>claims, paragraph [0004] | 4 |

| ☑ Further documents are listed in the continuation of Box C. | ☑ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2022/025331** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 10-244641 A (SEKISUI CHEM. CO., LTD.) 14 September 1998 (1998-09-14) claims, paragraph [0009] | 4 |

Form PCT/ISA/210 (second sheet) (January 2015)

**INTERNATIONAL SEARCH REPORT**
Information on patent family members

International application No.

**PCT/JP2022/025331**

| Patent document cited in search report | | | Publication date (day/month/year) | Patent family member(s) | | | Publication date (day/month/year) |
|---|---|---|---|---|---|---|---|
| WO | 2021/049182 | A1 | 18 March 2021 | JP | 6716764 | B1 | |
| JP | 01-216839 | A | 30 August 1989 | GB | 2216845 | A | |
| | | | | examples 1-5, 7-9, 11-12 | | | |
| | | | | KR 10-1989-0012792 | | A | |
| JP | 2019-119174 | A | 22 July 2019 | (Family: none) | | | |
| JP | 2018-062075 | A | 19 April 2018 | (Family: none) | | | |
| JP | 2019-085127 | A | 06 June 2019 | (Family: none) | | | |
| JP | 11-034253 | A | 09 February 1999 | (Family: none) | | | |
| JP | 08-003383 | A | 09 January 1996 | EP | 688819 | A1 | |
| | | | | claims, page 3, lines 31-33 | | | |
| | | | | CN | 1114965 | A | |
| | | | | KR 10-1996-0001001 | | A | |
| JP | 10-244641 | A | 14 September 1998 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6716764 B
- JP 11322833 A
- JP 9183816 A

**Non-patent literature cited in the description**

- PVA no Sekai (World of PVA). Kobunshi Kanko-Kai, Co., Ltd. (Polymer Publishing Society, Co., Ltd, 1992
- **NAGANO et al.** Poval. Kobunshi Kanko-Kai Co., Ltd, 1981